# EUROPÄISCHE PATENTSCHRIFT

(11) **EP 3 356 126 B1**
(45) Veröffentlichungstag und Bekanntmachung des Hinweises auf die Patenterteilung: **27.04.2022**
(21) Anmeldenummer: 16734604.8
(22) Anmeldetag: 27.06.2016
(51) Int. Cl.: B29C 70/86, B29C 37/00, B29C 70/82, F16B 37/12, B29C 33/12, B29C 70/54, B29C 70/46, B29L 1/00, F16B 37/04

(54) **VERFAHREN ZUM HERSTELLEN EINES FASERVERBUNDBAUTEILS MIT INTEGRIERTEM EINDREH-INSERT**
METHOD FOR PRODUCING A COMPOSITE FIBRE COMPONENT WITH AN INTEGRATED SCREW-IN INSERT
PROCÉDÉ POUR FABRIQUER UN ÉLÉMENT COMPOSITE RENFORCÉ DE FIBRES AVEC INSERT DE VISSAGE INTÉGRÉ

(30) Priorität: 28.09.2015 DE 102015218593
(43) Veröffentlichungstag der Anmeldung: 08.08.2018
(73) Patentinhaber: Bayerische Motoren Werke Aktiengesellschaft, 80809 München (DE)
(72) Erfinder: SCHINDLBECK, Martin, 84088 Neufahrn (DE)
(86) Internationale Anmeldenummer: PCT/EP2016/064827
(87) Internationale Veröffentlichungsnummer: WO 2017/054943

(56) Entgegenhaltungen:
- EP-A1- 2 607 062
- EP-A2- 1 048 858
- WO-A1-2012/146283
- JP-A- S6 342 819

## Beschreibung

Die Erfindung betrifft ein Verfahren zum Herstellen eines Faserverbundbauteils mit integriertem Eindreh-Insert, ein entsprechendes Eindreh-Insert sowie ein Presswerkzeug zur Durchführung des Verfahrens.

Um Faserverbundbauteile mit anderen Bauteilen zu verbinden, ist es bekannt Befestigungspunkte vorzusehen, die an oder in den Faserverbundbauteilen angeordnet sind. Üblicherweise umfassen die Befestigungspunkte spezielle Verbindungsmittel, wie Bolzen, Schrauben oder Muttern, die als Anbindungselemente eine Verbindung mit den anderen Bauteilen ermöglichen.

Diese Anbindungselemente werden in der Regel in nachträglichen Arbeitsschritten auf bereits fertig erzeugte und ausgehärtete Faserverbundbauteile aufgebracht, wodurch ein erheblicher Zusatzaufwand für das Vorbereiten der Verbindungsoberflächen durch Bohren, Fräsen, Spanen, Schleifen, Schneiden und Reinigen sowie für das eigentliche Verbinden durch oberflächliches Aufkleben entsteht. Die Verbindung wird in diesem Fall lediglich durch die stoffschlüssige Verbindung bereitgestellt und ist entsprechend in ihrer Festigkeit limitiert.

Diese Vorgehensweise ist dementsprechend zeitintensiv und bewirkt aufgrund der spanabhebenden Bearbeitung und je nach gewähltem Verbindungsmittel eine Schädigung des Laminataufbaus, welche eine Festigkeit des gesamten hergestellten Bauteils herabsetzt.

Um dies zu vermeiden, sind Verfahren bekannt, bei denen die Anbindungselemente bereits innerhalb des Herstellungsprozesses des Faserverbundbauteils an diesem befestigt werden. Hierzu erfolgt ein in der Regel händisches Einbringen des Anbindungselements in textilen Vorprozessen, insbesondere beim schichtweisen Aufbau von Lagenanordnungen, indem die Anbindungselemente zwischen die einzelnen Lagen eingelegt werden. Jedoch müssen diese Prozesse üblicherweise für das Einlegen der Anbindungselemente unterbrochen werden, mit der Folge, dass eine Taktzeit erheblich reduziert wird. Zudem sind meist ein Vernähen der Anbindungselemente und ein Lochen einzelner Faserlagen erforderlich. Die auf diese Weise erzeugten Lagenanordnungen werden anschließend in ein Presswerkzeug eingelegt und mittels Nasspressen unter hohem Druck zum Bauteil ausgeformt. Hierbei besteht die zusätzliche Gefahr, dass die lediglich eingelegten oder vernähten Anbindungselemente verrutschen oder zumindest aufgrund eines unvermeidlichen Spiels nicht reproduzierbar positioniert werden können, wodurch hohe Toleranzanforderungen an das Faserverbundbauteil nicht realisierbar sind.

Des Weiteren ist aus der EP 1 048 858 A2 ein Gewindeeinsatzelement für Kunststoff und ein Verfahren zum Einsetzen desselben in den Kunststoff bekannt.

Die WO 2012/146283 A1 befasst sich mit einem Verfahren und einer Vorrichtung zum Befestigen eines Gegenstandes in einem faserverstärkten Verbundmaterial.

In der EP 2 607 062 A1 ist ein Verfahren zur Herstellung eines Bauteils mit einem in das Bauteil eingebetteten Einsatzelements unter Verwendung eines Formwerkzeugs beschrieben.

Aufgabe der Erfindung ist es daher, ein Anbindungselement derart mit einem Faserverbundbauteil zu verbinden, dass sich das Faserverbundbauteil weitestgehend automatisiert verarbeiten lässt, hohen Toleranzanforderungen genügt sowie einfach und möglichst kostengünstig herstellbar ist.

Diese Aufgabe wird gelöst mit einem Verfahren gemäß Patentanspruch 1, einem Eindreh-Insert mit den Merkmalen des Patentanspruchs 5, sowie einem Presswerkzeug mit den Merkmalen des Patentanspruchs 10 Vorteilhafte Ausführungsformen ergeben sich aus den jeweils abhängigen Patentansprüchen.

Erfindungsgemäß wird ein Verfahren zum Herstellen eines Faserverbundbauteils mit integriertem Eindreh-Insert vorgestellt, mit mindestens den folgenden Schritten:
- Bereitstellen eines Presswerkzeugs mit einem ersten Werkzeugteil und einem relativ hierzu bewegbaren zweiten Werkzeugteil, wobei die beiden Werkzeugteile in einem geschlossenen Zustand des Presswerkzeugs eine Kavität zur formgebenden Aufnahme eines Faserhalbzeugs bilden,
- Verbinden eines Eindreh-Inserts mit einer in dem ersten Werkzeugteil integrierten Schraubvorrichtung,
- Anordnen des Faserhalbzeugs zwischen dem ersten und dem zweiten Werkzeugteil,
- Zumindest teilweises Schließen des Presswerkzeugs,
- Betätigen der Schraubvorrichtung zum Einschrauben des Eindreh-Inserts in das Faserhalbzeug, und
- Härten des Faserhalbzeugs zum Erzeugen des Faserverbundbauteils. Das Verfahren sieht somit vor, ein Anbindungselement in das Faserhalbzeug einzubringen und darin zu integrieren, indem das Anbindungselement in das Faserhalbzeug eingedreht beziehungsweise in dieses eingeschraubt wird. Dementsprechend wird das Anbindungselement im Folgenden als Insert beziehungsweise Eindreh-Insert bezeichnet.

Das Eindreh-Insert wird zunächst mit der Schraubvorrichtung verbunden, um anschließend in das Faserhalbzeug mittels der Schraubvorrichtung eingeschraubt zu werden. Das Verbinden kann beispielsweise ein Einsetzen in die Schraubvorrichtung sein oder vorzugsweise durch formschlüssigen Eingriff der entsprechend ausgestalteten Schraubvorrichtung in das Eindreh-Insert erfolgen, wobei der Eingriff spätestens zum Entnehmen des erzeugten Faserverbundbauteils oder bereits früher wieder lösbar sein muss. Das Einschrauben kann entweder ein Einschrauben mit einer lediglich teilweisen Umdrehungsbewegung, oder ein Einschrauben mit einer oder mehreren Umdrehungen umfassen.

Die Schraubvorrichtung kann in dem ersten Werkzeugteil integriert sein, um das Einschraub-Insert auch in dem zumindest teilweise geschlossenen Zustand des Presswerkzeugs in das Faserhalbzeug einschrauben zu können. Die Integration der Schraubvorrichtung kann derart ausgeführt sein, dass die Schraubvorrichtung bündig mit einer die Kavität begrenzenden Oberfläche des ersten Werkzeugteils oder zurückgesetzt zu dieser innerhalb des ersten Werkzeugteils vorgesehen ist. Zum Einschrauben des Eindreh-Inserts kann zumindest ein Schraubelement der Schraubvorrichtung oder die gesamte Schraubvorrichtung zumindest teilweise in Richtung der Kavität bewegt werden, wie weiter unten im Detail beschrieben wird.

Die Integration in das Werkzeugteil ermöglicht eine exakte und reproduzierbare Positionierung des Eindreh-Inserts gegenüber dem Presswerkzeug, wodurch die Einhaltung hoher Toleranzanforderungen sichergestellt wird. Zudem können aufwendige Klebeprozesse für die sonst üblicherweise erforderlichen Klebebolzen und die entsprechenden vorgelagerten Vorbereitungs- und Reinigungsmaßnahmen entfallen.

Vorzugsweise wird das Faserhalbzeug in einem mit einer Matrix imprägnierten und nicht-ausgehärteten Zustand in dem Presswerkzeug angeordnet. Da das Einschrauben in das Faserhalbzeug vor dem Härten des Faserhalbzeugs erfolgt, liegt die Matrix in flüssigem oder zähflüssigem Zustand vor, so dass die Fasern des Faserhalbzeugs dem eindringenden Eindreh-Insert ausweichen können beziehungsweise von diesem verdrängt werden. Auf diese Weise wird eine Schädigung der Faserstruktur und des späteren Laminatverbundes des hieraus erzeugten Faserverbundbauteils vermieden, wie sie anderenfalls beispielsweise beim Bohren in einem ausgehärteten Zustand des Faserhalbzeugs auftreten würde. Damit einhergehende Korrosionsprobleme und eindringendes Wasser sowie eine aufwendige Abdichtung von Bohrlöchern können entfallen.

Das erste Werkzeugteil wird vorzugsweise von einem Oberwerkzeug und das zweite Werkzeugteil von einem Unterwerkzeug des Presswerkzeugs gebildet. Alternativ kann aber auch umgekehrt das erste Werkzeugteil als Unterwerkzeug und das zweite Werkzeugteil als Oberwerkzeug ausgeführt sein. Es versteht sich, dass in jedem Fall das erste und/oder das zweite Werkzeugteil jeweils aus einem oder aus mehreren Stücken gefertigt sein können.

Selbstverständlich ist es möglich, dass zusätzlich in dem ersten Werkzeugteil ein oder mehrere weitere, analog ausgeführte Schraubvorrichtungen integriert sind, um eine entsprechende Anzahl weiterer Eindreh-Inserts in gleicher Weise in das Faserhalbzeug einzuschrauben. Zusätzlich oder alternativ hierzu können auch in dem zweiten Werkzeugteil eine oder mehrere der beschriebenen Schraubvorrichtungen integriert sein, um eine entsprechende Anzahl weiterer Eindreh-Inserts in gleicher Weise in das Faserhalbzeug einzuschrauben. In jedem Fall können die Schritte des Verbindens somit für jedes der Eindreh-Inserts wiederholt werden, entweder nacheinander oder gleichzeitig. Auch der Schritt des Betätigens der Schraubvorrichtung wird für die jeweilige Schraubvorrichtung der entsprechenden Anzahl an Schraubvorrichtungen wiederholt, entweder nacheinander oder gleichzeitig.

Das Faserhalbzeug kann ein Gewebe, Geflecht, Gelege, Multiaxialgelege, Gesticke, Gewirke oder ein Vlies sein. Geeignete Fasermaterialien sind Glasfasern, Kohlefasern, Aramidfasern, Kunststofffasern und/oder geeignete Naturfasern sowie alle beliebigen Kombinationen der genannten Materialien.

Gemäß einer weiteren Ausführungsform kann das Faserhalbzeug ein sogenanntes Sandwichbauteil sein, mit mindestens zwei Lagen jeweils aus einem der genannten Fasermaterialien, die wiederum jeweils als ein Gewebe, Geflecht, Gelege, Multiaxialgelege, Gesticke, Gewirke oder ein Vlies ausgeführt sind. Die mindestens zwei Lagen sind durch eine Zwischenschicht aus Füllmaterial, wie beispielsweise einem Kunststoff, Metall, oder Naturstoffen gebildet. Die Zwischenschicht kann Hohlkammern, beispielsweise in Form einer Wabenstruktur, oder ein Schaummaterial, insbesondere Schaummaterial aus Kunststoff oder Metall, umfassen.

Um das Presswerkzeug zum Härten des Faserhalbzeugs vorzubereiten, kann entweder der Schritt des zumindest teilweisen Schließens ein vollständiges Schließen des Presswerkzeugs umfassen, oder ein Schritt des vollständigen Schließens des Presswerkzeugs vor dem Härten des Faserhalbzeugs erfolgen.

Gemäß einer Ausführungsform umfasst das Verfahren ein Rückbewegen zumindest des Schraubelements der Schraubvorrichtung oder der gesamten Schraubvorrichtung bevor das Presswerkzeug geöffnet wird. Dies bedeutet, dass die Schraubvorrichtung aus ihrem Eingriff in das Eindreh-Insert gelöst und zumindest das Schraubelement von diesem entfernt wird. Auf diese Weise kann eine Beschädigung der Schraubvorrichtung und/oder des Faserverbundbauteils beim Öffnen des Presswerkzeugs und/oder Entnehmen des Faserverbundbauteils vermieden werden.

Erfindungsgemäß ist ein Eindreht-Insert vorgesehen, gemäß den Merkmalen des Anspruchs 5.

Der Betätigungsabschnitt ist insbesondere zur Verbindung mit der Schraubvorrichtung ausgebildet. Beispielsweise kann der Betätigungsabschnitt entsprechende Ausnehmungen und/oder Fortsätze zum formschlüssigen Eingreifen der Schraubvorrichtung und zum Übertragen eines Drehmoments aufweisen. Der Einschraubschaft ist zum Eindringen in das Faserhalbzeug und Verdrängen von Fasermaterial vorgesehen. Optional kann dieser auch zur zumindest teilweisen Verankerung des Eindreh-Inserts in dem Faserhalbzeug ausgeführt sein. Als Anbindungsabschnitt ist ein Abschnitt des Eindreh-Inserts zu verstehen, welcher zur Anbindung von weiteren Bauteilen vorgesehen ist.

Hierzu kann der Anbindungsabschnitt zum Beispiel ein Innengewinde, ein Außengewinde, ein Kupplungselement, ein Kugelelement, ein Bajonettelement oder ein Clipelement umfassen. Es versteht sich, dass diese Auflistung nicht abschließend ist und ebenso andere bekannte, zur Anbindung geeignete Verbindungselemente vorgesehen werden können. Beispielsweise umfasst der Anbindungsabschnitt eine in dem Eindreh-Insert angeordnete Bohrung, in der das Innengewinde zum Einschrauben von anderen Verbindungselementen vorgesehen ist. Alternativ kann der Anbindungsabschnitt einen zylinderförmigen Abschnitt umfassen, der sich in entgegengesetzter Richtung zu dem Einschraubschaft von dem Betätigungsabschnitt weg erstreckt und das Außengewinde aufweist, welches zum Aufschrauben von anderen Verbindungselementen ausgebildet ist.

Um das Eindreh-Insert sicher und für die Faserstruktur des Faserhalbzeugs möglichst schonend zu verankern, umfasst das Eindreh-Insert mindestens eine Gewindeschaufel, die zum Einschrauben und Verankern des Eindreh-Inserts in dem Faserhalbzeug ausgestaltet ist. Die Verankerung in der Faserstruktur des Faserhalbzeugs bietet einerseits den Vorteil, dass die Faserstruktur überwiegend erhalten bleibt. Zudem erhöht diese Verankerung insbesondere im Falle des hervorstehenden Fortsatzes die von dem Eindreh-Insert aufzunehmenden und übertragbaren Kräfte, sodass das Faserverbundbauteil mit Hilfe des Eindreh-Inserts auch für hohe Belastungen eingesetzt werden kann.

Erfindungsgemäß aufweist der Einschraubschaft einen zylinderförmigen Abschnitt, an welchem beabstandet zu dem Betätigungsabschnitt ein im Wesentlichen scheibenförmiger Flansch angeordnet ist, wobei der Flansch mindestens einen Flanschabschnitt aufweist, der aus einer durch den Flansch definierten Flanschebene hervorsteht, um die Gewindeschaufel zu bilden.

Der im Wesentlichen scheibenförmige Flansch ist also an mindestens einer Stelle seiner scheibenartigen Form im Bereich des mindestens einen Flanschabschnitts derart geformt, dass der hervorstehende Flanschabschnitt die Gewindeschaufel definiert, mit der das Eindreh-Insert in das Faserhalbzeug eingeschraubt wird. Zum Beispiel ist hierzu der hervorstehende Flanschabschnitt ähnlich einem Gewindeeingang in abgewandter Richtung von dem Betätigungsabschnitt geformt, um sich so in das Faserhalbzeug "einzugraben".

Der hervorstehende Flanschabschnitt kann derart ausgestaltet sein, dass dieser optional durch plastische Verformung zurück in die Flanschebene verformbar ist. In diesem Fall kann das Verfahren und das Presswerkzeug derart ausgeführt sein, dass beim Schließen des Presswerkzeugs eine oder beide Werkzeugteile eine entsprechende Biegekraft auf den hervorstehenden Flanschabschnitt aufbringen und diesen vorzugsweise nach dem Einschrauben in das Faserhalbzeug verformen und bündig in die Flanschebene bringen. Vorzugsweise umfasst hierzu das jeweils gegenüberliegende Werkzeugteil eine entsprechende Kontur, die einen Anschlag definiert, der den Flanschabschnitt beim Schließen des Presswerkzeugs in die gewünschte Position verformt.

Alternativ kann der im Wesentlichen scheibenförmige Flansch mindestens einen Flanschabschnitt aufweisen, der bündig mit dem scheibenförmigen Flansch ausgebildet ist und eine Ausnehmung zum Einbringen des Faserhalbzeugs sowie eine hieran angrenzende Schaufelkante umfasst, um die Gewindeschaufel zu bilden. Die Ausnehmung ist also beispielsweise als ausgeschnittenes "Kuchenstück" aus dem scheibenförmigen Flansch zu verstehen, dessen einer Rand als Schaufelkante ausgeführt ist und beim Einschrauben das Faserhalbzeug aufnimmt.

In jedem Fall kann der scheibenförmige Flansch einen Durchmesser aufweisen, der kleiner ist als die Größe des Betätigungsabschnitts. Insbesondere kann der Durchmesser des scheibenförmigen Flansches kleiner als ein Durchmesser des Betätigungsabschnittes sein, sofern dieser ebenfalls scheibenförmig ausgebildet ist, wie nachfolgend beschrieben.

Des Weiteren können der Betätigungsabschnitt eine von dem scheibenförmigen Flansch abgewandte Fase und/oder der scheibenförmige Flansch eine von dem Betätigungsabschnitt abgewandte Fase aufweisen. Die Fase des Betätigungsabschnitts erleichtert insbesondere ein Verbinden des Betätigungsabschnitts mit der Schraubvorrichtung. Dagegen erleichtert die Fase des scheibenförmigen Flansches das Einschrauben in das Faserhalbzeug, indem die Faserstruktur leichter und schonender verdrängt wird, als dies ohne Fase der Fall wäre.

Vorzugsweise ist der Betätigungsabschnitt scheibenförmig ausgebildet, wobei zwischen dem Betätigungsabschnitt und dem beabstandet angeordneten Flansch ein Aufnahmeabschnitt zur Aufnahme des Faserhalbzeugs definiert ist. Zunächst kann der scheibenförmige Flansch beim Einschrauben in das Faserhalbzeug durch dieses hindurch geschraubt werden. Das Faserhalbzeug wird dabei teilweise lokal verdrängt und gleitet auf der Rückseite des scheibenförmigen Flansches in den definierten Aufnahmeabschnitt. In diesem Zustand ist das Eindreh-Insert einerseits durch den scheibenförmigen Betätigungsabschnitt und andererseits durch den scheibenförmigen Flansch an dem Faserhalbzeug fixiert und flächig gehalten, so dass spätestens nach dem Härten eine belastbare Integration und Verankerung erzielt wird.

Sofern der hervorstehende Flanschabschnitt vorgesehen ist, kann dieser optional im Anschluss an das auf diese Weise erfolgte Einschrauben umgeformt werden, wie voranstehend beschrieben. Somit wird eine ebene Unterseite des Eindreh-Inserts erzeugt, welche durch die dem zweiten Werkzeugteil zugewandte Oberfläche des scheibenförmigen Flansches definiert ist und somit ein Lösen des Eindreh-Inserts aus dem Faserhalbzeug vermeidet. Wird der hervorstehende Flanschabschnitt nicht umgeformt, so kann dieser zumindest teilweise mit Matrix umschlossen werden.

Gemäß einer Ausführungsform kann der Einschraubschaft ein Außengewinde zum Einschrauben in das Faserhalbzeug umfassen und die mindestens eine Gewindeschaufel an dem Betätigungsabschnitt parallel beabstandet zu dem Einschraubschaft angeordnet sein.

In diesem Fall sorgt der Einschraubschaft für das Verdrängen des Fasermaterials. Je nach Länge der mindestens einen Gewindeschaufel greift diese zur Verankerung in dem Faserhalbzeug in die Faserstruktur ein. Vorzugsweise ist daher eine Länge der einen oder der mehreren Gewindeschaufeln jeweils kürzer als eine Länge des Einschraubschafts.

Erfindungsgemäß wird ein Presswerkzeug mit einem ersten Werkzeugteil und einem zweiten Werkzeugteil bereitgestellt, wobei die beiden Werkzeugteile in geschlossenem Zustand eine Kavität zur formgebenden Aufnahme eines Faserhalbzeugs bilden, wobei mindestens ein Werkzeugteil eine in Richtung der Kavität betätigbare Schraubvorrichtung zum Einschrauben eines Eindreh-Inserts in ein in der Kavität anzuordnendes Faserverbundbauteil aufweist.

Des Weiteren kann die Schraubvorrichtung mindestens ein drehbewegliches und in Richtung der Kavität längsbewegliches Schraubelement umfassen, welches mit einem Verbindungsabschnitt zum formschlüssigen Beaufschlagen eines Eindreh-Inserts ausgebildet ist. Beispielsweise kann das Schraubelement stiftförmig und an einer Stirnseite zur entsprechenden Beaufschlagung des Eindreh-Inserts ausgeführt sein, beispielsweise durch einen entsprechenden Fortsatz oder eine entsprechende Ausnehmung zur Erzielung der formschlüssigen Beaufschlagung. Das Schraubelement kann rotatorisch angetrieben sein und beispielsweise mittels eines Gewindes aus dem Werkzeugteil herausfahren, um das Eindreh-Insert in das Faserhalbzeug einzuschrauben. Gemäß einer bevorzugten Ausführungsform weist das Gewinde die gleiche Steigung auf wie die mindestens eine Gewindeschaufel und/oder ein eventuell vorgesehenes Gewinde des Einschraubschafts.

Vorzugsweise ist zumindest das Schraubelement der Schraubvorrichtung oder die gesamte Schraubvorrichtung in dem Werkzeugteil versenkbar ausgebildet. Dies bedeutet, dass das Schraubelement zumindest zwischen einer Ausgangsposition und einer Endposition längsbeweglich bewegbar ist. In der Ausgangsposition ist das Schraubelement in das Werkzeugteil zurückbewegt angeordnet, so dass es gegenüber einer die Kavität grenzenden Oberfläche des Werkzeugteils nicht hervorsteht, sondern mit seinem Verbindungsabschnitt entweder bündig mit der Oberfläche ist oder sogar zurückgesetzt zu dieser angeordnet ist. Die Endposition erreicht das Schraubelement durch die Schraubbewegung in Richtung der Kavität, sobald das Eindreh-Insert in der gewünschten Position angeordnet ist.

Zusätzlich kann die Schraubvorrichtung eine Harzschabenut aufweisen, so dass bei einer Rückbewegung des Schraubelementes in das Werkzeugteil eventuell an dem Schraubelement anhaftende Matrix aufgrund der Harzschabenut abgestreift wird, so dass ein Eindringen in die Schraubvorrichtung vermieden werden kann.

Gemäß einer Ausführungsform ist das Presswerkzeug ein Nasspresswerkzeug.

Optional kann die Schraubvorrichtung ein Haltemittel umfassen, insbesondere einen Magnethalter oder einen Vakuumhalter. Dies ermöglicht eine möglichst einfache, saubere und unkomplizierte Befestigung des Eindreh-Inserts an der Schraubvorrichtung beziehungsweise dessen Schraubelement, die bei Bedarf ohne weiteres gelöst werden kann, beispielsweise um das erzeugte Faserverbundbauteil nach Durchführung der beschriebenen Verfahrensschritte aus dem Presswerkzeug zu entnehmen oder um das Schraubelement aus dem Eingriff mit dem Eindreh-Insert zu lösen. Mit Hilfe dieser Haltemittel ist es insbesondere möglich, das Eindreh-Insert hängend zu positionieren, falls dieses im Oberwerkzeug des Presswerkzeugs angeordnet werden soll.

Die Erfindung wird nachfolgend anhand mehrerer Ausführungsbeispiele unter Bezugnahme auf die Figuren näher erläutert. Es zeigen:
Fig. 1 eine Seitenansicht eines Eindreh-Inserts in einer ersten Ausführungsform,
Fig. 2 eine Draufsicht auf das Eindreh-Insert aus Fig. 1,
Fig. 3 eine geschnittene Draufsicht des Eindreh-Inserts aus Fig. 1,
Fig. 4 eine Seitenansicht eines Eindreh-Inserts in einer zweiten Ausführungsform,
Fig. 5 eine geschnittene Seitenansicht des Eindreh-Inserts aus Fig. 4,
Fig. 6 eine Seitenansicht eines Eindreh-Inserts in einer dritten Ausführungsform.
Figur 7a, 7b, 7c, und 7d die Schritte eines Verfahrens zur Herstellung eines Faserverbundbauteils mit integriertem Eindreh-Insert,
Fig. 8 eine Seitenansicht eines Eindreh-Inserts in einer vierten Ausführungsform, und
Fig. 9a, 9b, 9c und 9d die Schritte eines Verfahrens zur Herstellung eines Faserverbundbauteils mit integriertem Eindreh-Insert gemäß Fig. 8.

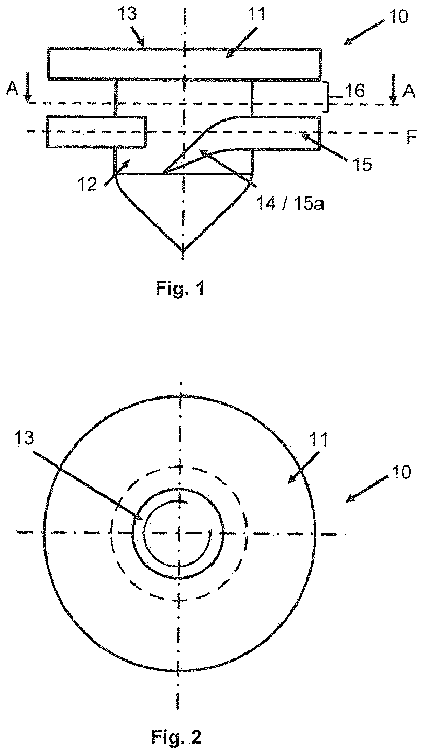

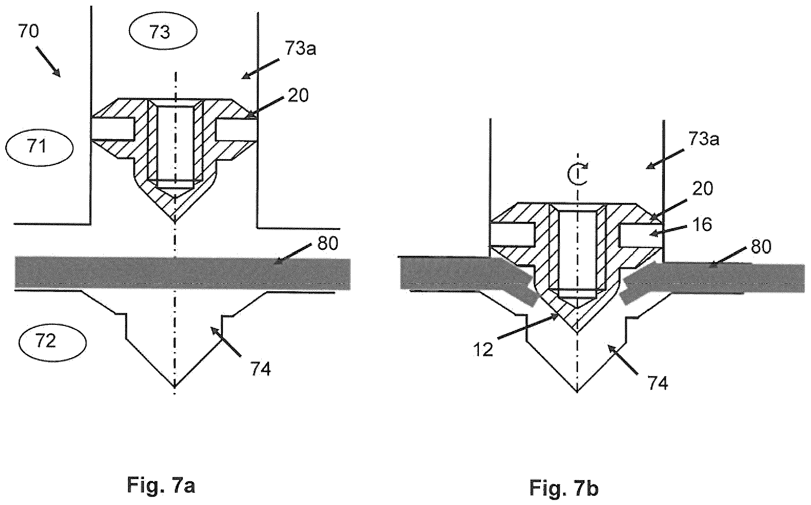

In Fig. 1 ist eine Seitenansicht eines Eindreh-Inserts 10 in einer ersten Ausführungsform dargestellt. Das Eindreh-Insert 10 ist zum Einschrauben in ein Faserhalbzeug 80 (siehe Fig. 7a bis 7d) vorgesehen und weist hierzu einen Betätigungsabschnitt 11 auf, mit dessen Hilfe das Eindreh-Insert 10 beispielsweise von einer Schraubvorrichtung (siehe Fig. 7a bis 7c) drehmomentübertragbar beaufschlagt und in das Faserhalbzeug 80 eingeschraubt werden kann. Außerdem sind ein von dem Betätigungsabschnitt 11 weg erstreckter Einschraubschaft 12 sowie ein Anbindungsabschnitt 13 vorgesehen.

Der Einschraubschaft 12 ist zum Eindringen in das Faserhalbzeug 80 und Verdrängen von Fasermaterial vorgesehen und weist hierzu einen im Wesentlichen zylinderförmigen Stift mit einer sich verjüngenden Spitze auf. Optional kann der Einschraubschaft 12 auch zur zumindest teilweisen Verankerung des Eindreh-Inserts 10 in dem Faserhalbzeug 80 ausgeführt sein. Als Anbindungsabschnitt 13 ist ein Abschnitt des Eindreh-Inserts 10 zu verstehen, welcher zur Anbindung von weiteren Bauteilen (nicht dargestellt) vorgesehen ist.

Hierzu kann der Anbindungsabschnitt 13 zum Beispiel ein Innengewinde umfassen, welches insbesondere in Fig. 2 (Draufsicht des Eindreh-Inserts 10) erkennbar ist. Alternativ und daher nicht dargestellt, kann der Anbindungsabschnitt 13 aber auch ein Außengewinde, ein Kugelelement oder ein Clipelement umfassen.

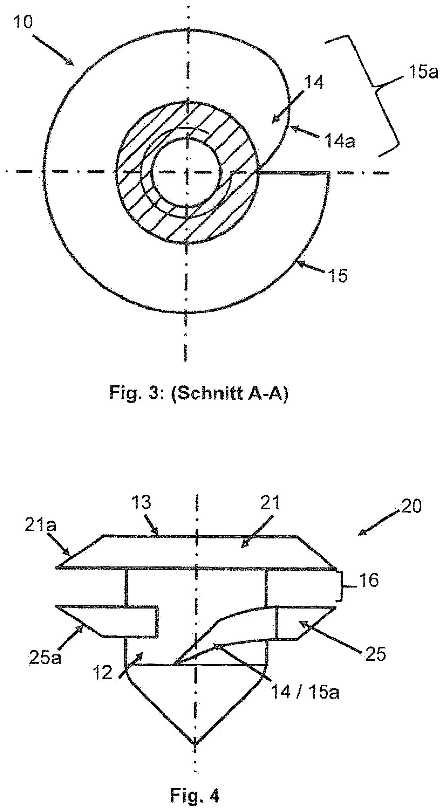

Zusätzlich umfasst das Eindreh-Insert 10 eine Gewindeschaufel 14, die zum Einschrauben des Eindreh-Inserts 10 in das Faserhalbzeug 80 ausgestaltet ist. Hierzu weist der Einschraubschaft 12 einen zylinderförmigen Abschnitt auf, an welchem beabstandet zu dem Betätigungsabschnitt 11 ein im Wesentlichen scheibenförmiger Flansch 15 angeordnet ist. Wie insbesondere aus Fig. 1 und der in Fig. 3 dargestellten Schnittansicht A-A ersichtlich, weist der Flansch 15 einen Flanschabschnitt 15a auf, der aus einer durch den Flansch 15 definierten Flanschebene F (senkrecht zur Bildebene) in einer von dem Betätigungsabschnitt 13 abgewandten Seite hervorsteht, um die Gewindeschaufel 14 zu bilden. Zusätzlich ist eine äußere Kante 14a der Gewindeschaufel 14 in Richtung des Einschraubschaftes 12 gebogen ausgeformt, um leichter in das Faserhalbzeug 80 einzudringen.

Zusätzlich ist der Betätigungsabschnitt 11 scheibenförmig ausgebildet, so dass zwischen dem Betätigungsabschnitt 11 und dem beabstandet angeordneten Flansch 15 ein Aufnahmeabschnitt 16 zur Aufnahme des Faserhalbzeugs 80 definiert ist.

Beim Einschrauben in das Faserhalbzeug 80 dringt also die durch den hervorstehende Flanschabschnitt 14 gebildete Gewindeschaufel 14 in die Faserstruktur des Faserhalbzeugs 80 ein, so dass diese in Richtung des Betätigungsabschnittes 11 verdrängt wird und sich aufgrund der Drehbewegung des Eindreh-Inserts 10 in den Aufnahmeabschnitt 16 eindreht, wie in den Figuren 7a bis 7d dargestellt und beschrieben wird.

In Fig. 4 ist eine Seitenansicht eines Eindreh-Inserts 20 in einer zweiten Ausführungsform dargestellt, die im Wesentlichen dem bereits in Fig. 1, 2 und 3 dargestellten Eindreh-Insert 10 der ersten Ausführungsform entspricht, so dass auf die entsprechende Beschreibung verwiesen wird und die entsprechenden Elemente - sofern identisch - mit gleichen Bezugszeichen gekennzeichnet sind.

Im Unterschied zu diesem, weist das Eindreh-Insert 20 gemäß der zweiten Ausführungsform einen Betätigungsabschnitt 21 auf, der eine dem ersten Werkzeugteil zugewandte Fase 21a umfasst. Diese ist folglich von dem scheibenförmigen Flansch 25 abgewandt angeordnet. Außerdem ist auch an dem scheibenförmigen Flansch 25 eine dem zweiten Werkzeugteil zugewandte Fase 25a angeordnet. Diese ist folglich von dem Betätigungsabschnitt 21 abgewandt angeordnet.

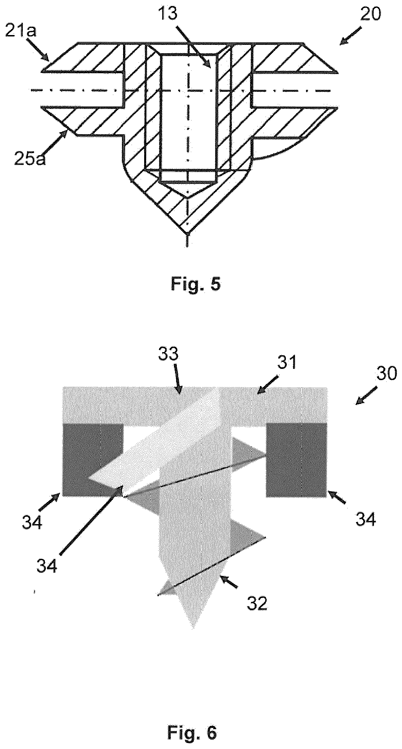

In Fig. 5 ist zusätzlich eine geschnittene Ansicht des Eindreh-Inserts 20 aus Fig. 4 dargestellt. Sie ist mit Ausnahme der Fasen 21a,25a ebenso für die erste Ausführungsform gemäß den Fig. 1 bis 3 gültig und zeigt den als Innengewinde ausgeführten Anbindungsabschnitt 13.

Fig. 6 zeigt eine Seitenansicht eines Eindreh-Inserts 30 gemäß einer dritten Ausführungsform. Demnach umfasst das Eindreh-Insert 30 ebenfalls einen Betätigungsabschnitt 31, einen von dem Betätigungsabschnitt 31 weg erstreckten Einschraubschaft 32 sowie einen Anbindungsabschnitt 33.

In der dargestellten Ausführungsform umfasst der Einschraubschaft 32 jedoch ein Außengewinde zum Einschrauben in das Faserhalbzeug 80. Zusätzlich sind vier Gewindeschaufeln 34 (dargestellt sind lediglich drei Gewindeschaufeln) vorgesehen, die zum Einschrauben und Verankern des Eindreh-Inserts 30 in dem Faserhalbzeug 80 ausgestaltet sind. Die Gewindeschaufeln 34 sind an dem Betätigungsabschnitt 31 parallel beabstandet zu dem Einschraubschaft 32 angeordnet und in Umfangsrichtung des Betätigungsabschnitts 31 in gleichen Abständen zueinander angeordnet.

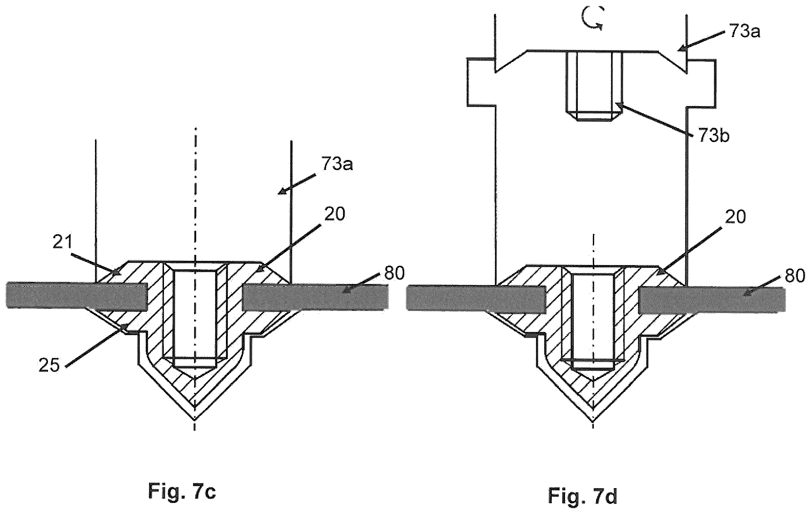

Die Figur 7a, 7b, 7c, und 7d zeigen vier Schritte eines Verfahrens zur Herstellung eines Faserverbundbauteils 81 mit integriertem Eindreh-Insert 20 gemäß der zweiten Ausführungsform. Es versteht sich, dass auf gleiche Art und Weise aber auch andere Eindreh-Inserts 10,30, insbesondere die in den Fig. 1 bis 6 dargestellten Eindreh-Inserts 10,30 gemäß der ersten oder dritten Ausführungsform, eingesetzt werden können.

In Fig. 7a ist ein Ausgangszustand dargestellt, in dem ein bereitgestelltes Presswerkzeug 70 (lediglich auszugsweise und in stark vereinfachter Weise dargestellt) ein als Oberwerkzeug ausgeführtes erstes Werkzeugteil 71 und ein relativ hierzu bewegbares zweites Werkzeugteil 72 umfasst, welches als Unterwerkzeug ausgeführt ist. Selbstverständlich kann das erste Werkzeugteil aber auch als Unterwerkzeug und das zweite Werkzeugteil als Oberwerkzeug vorgesehen werden.

Beide Werkzeugteile 71,72 sind relativ zueinander bewegbar, um in einem geschlossenen Zustand des Presswerkzeugs 70 eine Kavität 74 zur formgebenden Aufnahme des Faserverbundbauteils 81 zu bilden.

Das Eindreh-Insert 20 gemäß der in den Figuren 4 und 5 beschriebenen zweiten Ausführungsform ist mit einer in dem ersten Werkzeugteil 71 integrierten Schraubvorrichtung 73 verbunden und das Faserhalbzeug 80 zwischen dem ersten 71 und dem zweiten Werkzeugteil 72 angeordnet, wobei das Faserhalbzeug 80 in einem mit einer Matrix imprägnierten und nicht-ausgehärteten Zustand vorgesehen ist.

Das Presswerkzeug 70 wird gemäß Fig. 7b zumindest teilweise geschlossen. Zusätzlich erfolgt eine Betätigung der Schraubvorrichtung 73 zum Einschrauben des Eindreh-Inserts 20 in das Faserhalbzeug 80 mittels eines Schraubelements 73a, welches mit Hilfe eines Gewindes (nicht dargestellt) drehbeweglich und längsbeweglich in Richtung der Kavität 74 bewegbar ist. Das Schraubelement 73a ist stiftförmig ausgeführt und an einer Stirnseite zur entsprechenden Beaufschlagung des Eindreh-Inserts ausgeführt, in der dargestellten Ausführungsform mit einem lediglich optionalen Fortsatz 73b zur Erzielung der formschlüssigen Beaufschlagung.

Als Erstes dringt der Einschraubschaft 12 mit seiner Spitze in das Faserhalbzeug 80 ein und verdrängt einen Teil der Faserstruktur. Mit zunehmender Tiefe erreicht der hervorstehende Flanschabschnitt 15a das Faserhalbzeug 80 und wird in die Faserstruktur eingeschraubt. Das Faserhalbzeug 80 wird - wie bereits beschrieben - in Richtung des Betätigungsabschnittes 21 verdrängt und dreht sich aufgrund der Drehbewegung des Eindreh-Inserts 20 in den Aufnahmeabschnitt 16 ein.

Das Faserhalbzeug 80 wird dabei teilweise lokal verdrängt und gleitet auf einer Rückseite des scheibenförmigen Flansches 25 in den definierten Aufnahmeabschnitt 16, wie in Fig. 7c dargestellt. In diesem Zustand ist das Eindreh-Insert 20 einerseits durch den scheibenförmigen Betätigungsabschnitt 21 und andererseits durch den scheibenförmigen Flansch 25 an dem Faserhalbzeug 80 fixiert und flächig gehalten beziehungsweise abgestützt, so dass eine Übertragung hoher Kräfte möglich wird.

Optional kann das Presswerkzeug 70 derart ausgestaltet sein, dass der hervorstehende Flanschabschnitt 15a (siehe Fig. 4) im Anschluss an das auf diese Weise erfolgte Einschrauben umgeformt wird, indem das Eindreh-Insert 20 gegen das gegenüberliegende Werkzeugteil, hier: das untere Werkzeugteil 72, gepresst wird, beispielsweise mittels des Schraubelements 73a und/oder indem das Presswerkzeug 70 weiter geschlossen wird. Auf diese Weise wird eine ebene Unterseite des Eindreh-Inserts 20 erzeugt, welche durch die dem zweiten Werkzeugteil 72 zugewandte Oberfläche des scheibenförmigen Flansches 25 definiert ist und somit ein Lösen des Eindreh-Inserts 20 aus dem Faserhalbzeug 80 verhindert.

Im Anschluss an das beschriebene Einbringen des Eindreh-Inserts 20 in das Faserhalbzeug 80 erfolgt ein Härten des Faserhalbzeugs 80 in dem Presswerkzeug 70 unter Temperatur- und/oder Druckbeaufschlagung zum Erzeugen des Faserverbundbauteils 81.

Bevor das Presswerkzeug 70 geöffnet wird, sollte vorzugsweise die Schraubvorrichtung 73 oder zumindest das Schraubelement 73a zurückbewegt werden, um einen Eingriff in das Eindreh-Insert 20 zu lösen und eine Entnahme des auf die beschriebene Weise erzeugten Faserverbundbauteils 81 zu erleichtern. Es versteht sich, dass der Schritt des Rückbewegens der Schraubvorrichtung 73 oder zumindest das Schraubelement 73a alternativ bereits vor dem Härten erfolgen kann.

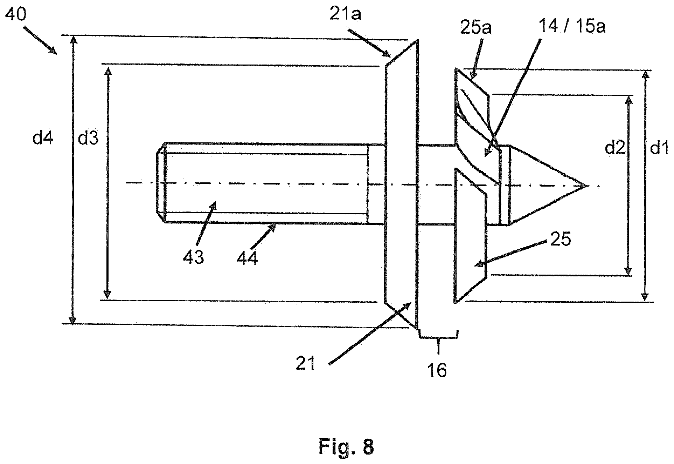

In Fig. 8 ist eine Seitenansicht eines Eindreh-Inserts 40 in einer vierten Ausführungsform dargestellt, die im Wesentlichen dem bereits in Fig. 4 dargestellten Eindreh-Insert 20 der zweiten Ausführungsform entspricht, so dass auf die entsprechende Beschreibung verwiesen wird und die entsprechenden Elemente - sofern identisch - mit gleichen Bezugszeichen gekennzeichnet sind.

Im Unterschied zu diesem, weist das Eindreh-Insert 40 gemäß der vierten Ausführungsform einen Anbindungsabschnitt 43 auf, der einen zylinderförmigen Abschnitt umfasst, welcher ein Außengewinde 44 zum Verbinden mit anderen Bauteilen und Verbindungsmitteln (nicht dargestellt) aufweist.

Zusätzlich ist ein Durchmesser d1 des scheibenförmigen Flansches 25 kleiner als ein Durchmesser d4 des Betätigungsabschnitts 21. Dies ist im Falle der optional vorgesehenen Fasen 21a,25a derart zu verstehen, dass jeweils der größte Durchmesser d1 des scheibenförmigen Flansches 25 kleiner als der größte Durchmesser d4 des Betätigungsabschnitts 21 ist, und der kleinste Durchmesser d2 des scheibenförmigen Flansches 25 kleiner als der kleinste Durchmesser d3 des Betätigungsabschnitts 21 ist. Lediglich optional kann außerdem der größte Durchmesser d1 des scheibenförmigen Flansches 25 kleiner oder gleich dem kleinsten Durchmesser d3 des Betätigungsabschnitts 21 bemessen sein.

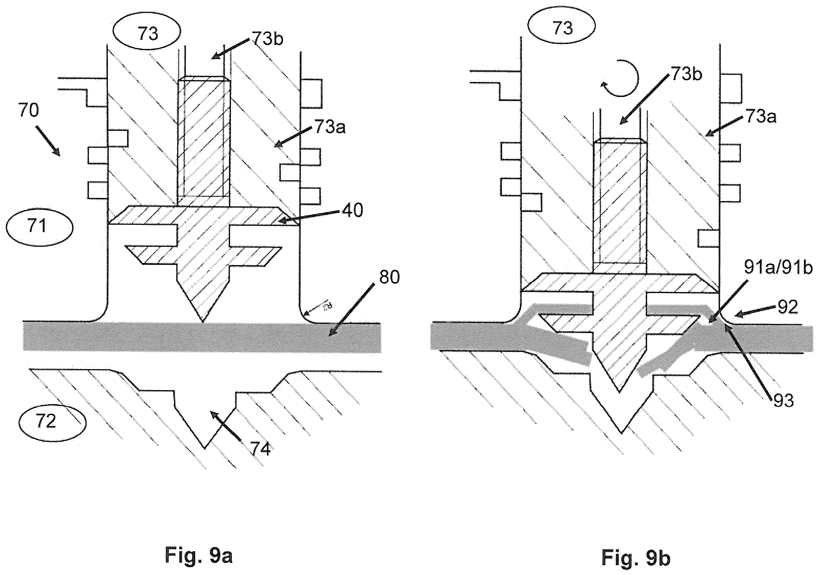

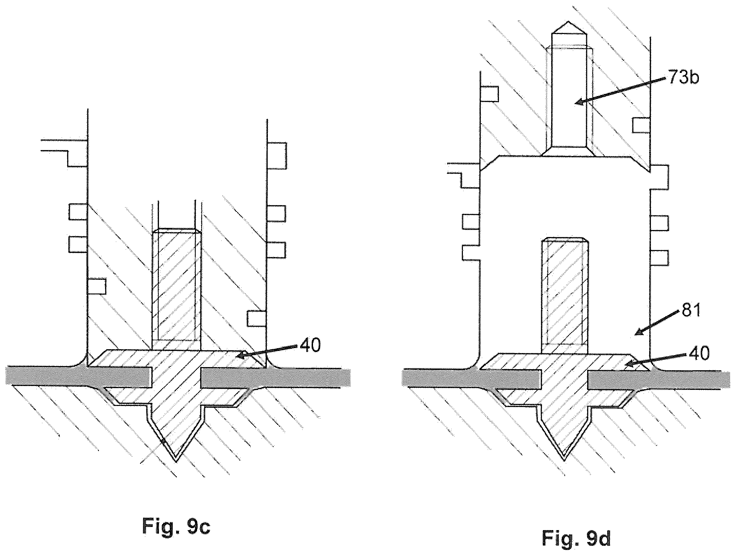

Die Figur 9a, 9b, 9c, und 9d zeigen vier Schritte eines Verfahrens zur Herstellung eines Faserverbundbauteils 81 mit integriertem Eindreh-Insert 40 gemäß der vierten Ausführungsform. Die einzelnen Schritte entsprechen im Wesentlichen den bereits zu den Fig. 7a bis 7d beschriebenen Schritten, so dass auf die bereits hierzu gegebene Beschreibung verwiesen wird. Diese ist somit auch für die Schritte der Fig. 9a bis 9d gültig, so dass im Folgenden lediglich die Unterschiede und Besonderheiten beschrieben werden, die sich aus der Verwendung des Eindreh-Inserts 40 der vierten Ausführungsform ergeben. Es versteht sich, dass auf gleiche Art und Weise aber auch andere Eindreh-Inserts 10,20,30, insbesondere die in den Fig. 1 bis 6 dargestellten Eindreh-Inserts 10,20, 30 gemäß der ersten, zweiten oder dritten Ausführungsform, eingesetzt werden können.

In Fig. 9a ist das Eindreh-Insert 40 mit der in dem ersten Werkzeugteil 71 integrierten Schraubvorrichtung 73 verbunden und das Faserhalbzeug 80 zwischen dem ersten 71 und dem zweiten Werkzeugteil 72 angeordnet, wobei das Faserhalbzeug 80 in einem mit einer Matrix imprägnierten und nicht-ausgehärteten Zustand vorgesehen ist.

Das Presswerkzeug 70 wird gemäß Fig. 9b zumindest teilweise geschlossen. Zusätzlich erfolgt eine Betätigung der Schraubvorrichtung 73 zum Einschrauben des Eindreh-Inserts 40 in das Faserhalbzeug 80 mittels des Schraubelements 73a, welches mit Hilfe eines Gewindes (nicht dargestellt) drehbeweglich und längsbeweglich in Richtung der Kavität 74 bewegbar ist. Das Schraubelement 73a ist stiftförmig ausgeführt und im Bereich einer Stirnseite mit einem Innengewinde 73b zum Verbinden mit dem Außengewinde 44 des Eindreh-Inserts 40 versehen.

Das Eindreh-Insert 40 wird zunächst mit der Spitze des Einschraubschafts 12 in das Faserhalbzeug 80 eingebracht und verdrängt einen Teil der Faserstruktur. Mit zunehmender Tiefe erreicht der hervorstehende Flanschabschnitt 15a (siehe Fig. 8) das Faserhalbzeug 80 und wird in die Faserstruktur eingeschraubt. Das Faserhalbzeug 80 wird in Richtung des Betätigungsabschnittes 21 verdrängt und dreht sich aufgrund der Drehbewegung des Eindreh-Inserts 40 in den Aufnahmeabschnitt 16 ein.

Optional wird der Durchmessers d1 des Flansches 25 kleiner als der Durchmesser d3 des Betätigungselements 21 gewählt, so dass ein Spalt 91a zwischen dem ersten Werkzeugteil 71 und dem Flansch 25 erzeugt wird, wodurch das Faserhalbzeug 80 leichter und sicher in den Aufnahmeabschnitt 16 eingebracht werden kann. Ein Abreißen der Faserstruktur wird auf diese Weise vermieden.

Zusätzlich oder alternativ zu dieser Wahl der Durchmesser kann in dem ersten Werkzeugteil 71 im Bereich einer Einmündung 93 der Schraubvorrichtung 73 in die die Kavität 74 begrenzende Oberfläche des ersten Werkzeugteils 71 eine Ausnehmung 93, beispielsweise in Form einer Fase oder einer Verrundung, vorgesehen sein, um ebenfalls einen Spalt 91b zwischen dem ersten Werkzeugteil 71 und dem Flansch 25 zu erzeugt oder den bestehenden, durch die genannte Durchmesserwahl bereitgestellten Spalt 91a zu vergrößern, so dass das Faserhalbzeug 80 leichter und sicher in den Aufnahmeabschnitt 16 eingebracht werden kann. Ein Abreißen der Faserstruktur wird ebenfalls sicher vermieden.

Die in den Fig. 9c und 9d ausgeführten Schritte entsprechen den in Fig. 7c und 7d dargestellten Schritten.

## Patentansprüche

1. Verfahren zum Herstellen eines Faserverbundbauteils mit integriertem Eindreh-Insert, mit mindestens den folgenden Schritten:
- Bereitstellen eines Presswerkzeugs (70) mit einem ersten Werkzeugteil (71) und einem relativ hierzu bewegbaren zweiten Werkzeugteil (72), welche in einem geschlossenen Zustand des Presswerkzeugs (70) eine Kavität (74) zur formgebenden Aufnahme eines Faserhalbzeugs (80) bilden,
- Verbinden eines Eindreh-Inserts (10,20,30) mit einer in dem ersten Werkzeugteil (71) integrierten Schraubvorrichtung (73),
- Anordnen des Faserhalbzeugs (80) zwischen dem ersten (71) und dem zweiten Werkzeugteil (72),
- Zumindest teilweises Schließen des Presswerkzeugs (70),
- Betätigen der Schraubvorrichtung (73) zum Einschrauben des Eindreh-Inserts (10,20,30) in das Faserhalbzeug (80), und
- Härten des Faserhalbzeugs (80) zum Erzeugen des Faserverbundbauteils (81).

2. Verfahren nach Anspruch 1, wobei das Faserhalbzeug (80) in einem mit einer Matrix imprägnierten und nicht-ausgehärteten Zustand in dem Presswerkzeug (70) angeordnet wird.

3. Verfahren nach einem der Ansprüche 1 bis 2, wobei der Schritt des zumindest teilweisen Schließens ein vollständiges Schließen des Presswerkzeugs (70) umfasst, oder ein Schritt des vollständigen Schließens des Presswerkzeugs (70) vor dem Härten des Faserhalbzeugs (80) erfolgt.

4. Verfahren nach einem der Ansprüche 1 bis 3, wobei das Verfahren ein Rückbewegen zumindest eines Schraubelements (73a) der Schraubvorrichtung (73) umfasst bevor das Presswerkzeug (70) geöffnet wird.

5. Eindreh-Insert zum Einschrauben in ein Faserhalbzeug, wobei das Eindreh-Insert (10,20,30) einen Betätigungsabschnitt (11,21,31), einen von dem Betätigungsabschnitt (11,21,31) weg erstreckten Einschraubschaft (12) sowie einen Anbindungsabschnitt (13,33) umfasst, wobei das Eindreh-Insert (10,20,30) mindestens eine Gewindeschaufel (14,34) umfasst, die zum Einschrauben und Verankern des Eindreh-Inserts (10,20,30) in dem Faserhalbzeug (80) ausgestaltet ist, und wobei der Einschraubschaft (12) einen zylinderförmigen Abschnitt aufweist, an welchem beabstandet zu dem Betätigungsabschnitt (11,21,31) ein im wesentlichen scheibenförmiger Flansch (15,25) angeordnet ist, wobei der Flansch (15,25) mindestens einen Flanschabschnitt (15a) aufweist, der aus einer durch den Flansch (15,25) definierten Flanschebene (F) hervorsteht, um die mindestens eine Gewindeschaufel (14,34) zu bilden.

6. Eindreh-Insert nach Anspruch 5, wobei der Anbindungsabschnitt (13,33) ein Innengewinde, ein Außengewinde, ein Kugelelement, ein Bajonettelement oder ein Clipelement umfasst.

7. Eindreh-Insert nach Anspruch 5, wobei der Betätigungsabschnitt (11,21,31) eine dem scheibenförmigen Flansch (15,25) abgewandte Fase (21a) und/oder der scheibenförmige Flansch eine dem Betätigungsabschnitt (11,21,31) abgewandte Fase (25a) aufweist.

8. Eindreh-Insert nach einem der Ansprüche 5 bis 7, wobei der Betätigungsabschnitt (11,21,31) scheibenförmig ausgebildet ist und zwischen dem Betätigungsabschnitt (11,21,31) und dem beabstandet angeordneten Flansch (15,25) ein Aufnahmeabschnitt (16) zur Aufnahme des Faserhalbzeugs (80) definiert ist.

9. Eindreh-Insert nach einem der Ansprüche 5 bis 8, wobei der Einschraubschaft (12) ein Außengewinde zum Einschrauben in das Faserhalbzeug (80) umfasst und die mindestens eine Gewindeschaufel (14,34) an dem Betätigungsabschnitt parallel beabstandet zu dem Einschraubschaft (12) angeordnet ist.

10. Presswerkzeug mit einem ersten Werkzeugteil (71) und einem zweiten Werkzeugteil (72), wobei die beiden Werkzeugteile (71,72) in geschlossenem Zustand eine Kavität (74) zur formgebenden Aufnahme eines Faserhalbzeugs (80) bilden, **dadurch gekennzeichnet, dass** mindestens ein Werkzeugteil (71,72) eine in Richtung der Kavität (74) betätigbare Schraubvorrichtung (73) zum Einschrauben eines Eindreh-Inserts (10,20,30) in das in der Kavität (74) anzuordnende Faserhalbzeug (80) aufweist.

11. Presswerkzeug nach Anspruch 10, **dadurch gekennzeichnet, dass** die Schraubvorrichtung (73) ein drehbeweglichen und in Richtung der Kavität längsbewegliches Schraubelement (73a) umfasst, das mit einem der Kavität (74) zugewandten Verbindungsabschnitt zum formschlüssigen Beaufschlagen eines Eindreh-Inserts (10,20,30) ausgebildet ist.

12. Presswerkzeug nach einem der Ansprüche 10 bis 11, **dadurch gekennzeichnet, dass** die Schraubvorrichtung (73) in dem Werkzeugteil (71,72) versenkbar ausgebildet ist.

13. Presswerkzeug nach einem der Ansprüche 10 bis 12, **dadurch gekennzeichnet, dass** das Presswerkzeug (70) ein Nasspresswerkzeug ist.

## Claims

1. Method for producing a fibre composite component having an integrated screw-in insert, said method comprising at least the following steps:
- providing a pressing tool (70) having a first tool part (71) and a second tool part (72) that is movable relative to the first tool part, said first tool part and said second tool part forming a cavity (74) for receiving a fibrous semi-finished product (80) in a shape-imparting manner in a closed state of the pressing tool (70),
- connecting a screw-in insert (10, 20, 30) to a screw-driving device (73) that is integrated in the first tool part (71),
- arranging the fibrous semi-finished product (80) between the first (71) and the second tool part (72),
- at least partially closing the pressing tool (70),
- activating the screw-driving device (73) in order to screw the screw-in insert (10, 20, 30) into the fibrous semi-finished product (80), and
- curing the fibrous semi-finished product (80) in order to generate the fibre composite component (81) .

2. Method according to Claim 1, wherein the fibrous semi-finished product (80) is arranged in the pressing tool (70) in a state in which said fibrous semi-finished product is impregnated with a matrix and is not cured.

3. Method according to one of Claims 1 to 2, wherein the step of at least partial closing comprises completely closing the pressing tool (70), or a step of completely closing the pressing tool (70) is performed prior to the curing of the fibrous semi-finished product (80).

4. Method according to one of Claims 1 to 3, wherein the method comprises moving back at least a screw-driving element (73a) of the screw-driving device (73) before the pressing tool (70) is opened.

5. Screw-in insert for screwing into a fibrous semi-finished product, wherein the screw-in insert (10, 20, 30) comprises an activation portion (11, 21, 31), a screw-in shaft (12) that extends away from the activation portion (11, 21, 31), and a linking portion (13, 33), wherein the screw-in insert (10, 20, 30) comprises at least one thread blade (14, 34) which is designed for screwing the screw-in insert (10, 20, 30) into the fibrous semi-finished product (80) and anchoring it therein, and wherein the screw-in shaft (12) has a cylindrical portion on which a substantially disc-shaped flange (15, 25) is arranged so as to be spaced apart from the activation portion (11, 21, 31), wherein the flange (15, 25) has at least one flange portion (15a) which projects from a flange plane (F) that is defined by the flange (15, 25), in order to form the at least one thread blade (14, 34).

6. Screw-in insert according to Claim 5, wherein the linking portion (13, 33) comprises an internal thread, an external thread, a ball element, a bayonet element or a clip element.

7. Screw-in insert according to Claim 5, wherein the activation portion (11, 21, 31) has a chamfer (21a) that faces away from the disc-shaped flange (15, 25), and/or the disc-shaped flange has a chamfer (25a) that faces away from the activation portion (11, 21, 31).

8. Screw-in insert according to one of Claims 5 to 7, wherein the activation portion (11, 21, 31) is of disc-shaped form, and a receptacle portion (16) for receiving the fibrous semi-finished product (80) is defined between the activation portion (11, 21, 31) and the flange (15, 25) that is arranged so as to be spaced apart therefrom.

9. Screw-in insert according to one of Claims 5 to 8, wherein the screw-in shaft (12) comprises an external thread for screwing into the fibrous semi-finished product (80), and the at least one thread blade (14, 34) on the activation portion is arranged so as to be spaced apart in parallel with respect to the screw-in shaft (12).

10. Pressing tool having a first tool part (71) and a second tool part (72), wherein the two tool parts (71, 72) form a cavity (74) for receiving a fibrous semi-finished product (80) in a shape-imparting manner in the closed state, **characterized in that** at least one tool part (71, 72) has a screw-driving device (73) which is activatable in the direction of the cavity (74) in order to screw a screw-in insert (10, 20, 30) into the fibrous semi-finished product (80) to be arranged in the cavity (74).

11. Pressing tool according to Claim 10, **characterized in that** the screw-driving device (73) comprises a screw-driving element (73a) that is movable in a rotational manner and in a longitudinal manner in the direction of the cavity and that is configured with a connecting portion facing the cavity (74) for impinging a screw-in insert (10, 20, 30) in a form-fitting manner.

12. Pressing tool according to one of Claims 10 to 11, **characterized in that** the screw-driving device (73) in the tool part (71, 72) is of retractable form.

13. Pressing tool according to one of Claims 10 to 12, **characterized in that** the pressing tool (70) is a wet pressing tool.

## Revendications

1. Procédé de fabrication d'un composant composite fibreux avec insert de vissage intégré, comprenant au moins les étapes suivantes :
- la fourniture d'un outil de pressage (70) comprenant une première partie d'outil (71) et une deuxième partie d'outil (72) mobile par rapport à celle-ci, qui forment, dans un état fermé de l'outil de pressage (70), une cavité (74) pour la réception avec façonnement d'un demi-produit fibreux (80),
- la liaison d'un insert de vissage (10, 20, 30) à un dispositif à vis (73) intégré dans la première partie d'outil (71),
- l'agencement du demi-produit fibreux (80) entre la première (71) et la deuxième partie d'outil (72),
- la fermeture au moins partielle de l'outil de pressage (70),
- l'actionnement du dispositif à vis (73) pour visser l'insert de vissage (10, 20, 30) dans le demi-produit fibreux (80), et
- le durcissement du demi-produit fibreux (80) pour produire le composant composite fibreux (81).

2. Procédé selon la revendication 1, dans lequel le demi-produit fibreux (80) est agencé dans l'outil de pressage (70) dans un état imprégné avec une matrice et non durci.

3. Procédé selon l'une quelconque des revendications 1 à 2, dans lequel l'étape de fermeture au moins partielle comprend une fermeture complète de l'outil de pressage (70), ou une étape de fermeture complète de l'outil de pressage (70) est effectuée avant le durcissement du demi-produit fibreux (80).

4. Procédé selon l'une quelconque des revendications 1 à 3, dans lequel le procédé comprend un déplacement en arrière d'au moins un élément de vis (73a) du dispositif à vis (73) avant l'ouverture de l'outil de pressage (70).

5. Insert de vissage destiné à être vissé dans un demi-produit fibreux, l'insert de vissage (10, 20, 30) comprenant une section d'actionnement (11, 21, 31), une tige de vissage (12) s'étendant à partir de la section d'actionnement (11, 21, 31), ainsi qu'une section de rattachement (13, 33), l'insert de vissage (10, 20, 30) comprenant au moins une pale filetée (14, 34), qui est conçue pour le vissage et l'ancrage de l'insert de vissage (10, 20, 30) dans le demi-produit fibreux (80), et la tige de vissage (12) présentant une section de forme cylindrique, sur laquelle est agencée, à distance de la section d'actionnement (11, 21, 31), une bride (15, 25) essentiellement en forme de disque, la bride (15, 25) présentant au moins une section de bride (15a) qui dépasse d'un plan de bride (F) défini par la bride (15, 25) afin de former l'au moins une pale filetée (14, 34).

6. Insert de vissage selon la revendication 5, dans lequel la section de rattachement (13, 33) comprend un filetage intérieur, un filetage extérieur, un élément à bille, un élément à baïonnette ou un élément à clip.

7. Insert de vissage selon la revendication 5, dans lequel la section d'actionnement(11, 21, 31) présente un chanfrein (21a) détourné de la bride en forme de disque (15, 25) et/ou la bride en forme de disque présente un chanfrein (25a) détourné de la section d'actionnement (11, 21, 31).

8. Insert de vissage selon l'une quelconque des revendications 5 à 7, dans lequel la section d'actionnement (11, 21, 31) est configurée en forme de disque et une section de réception (16) destinée à recevoir le demi-produit fibreux (80) est définie entre la section d'actionnement (11, 21, 31) et la bride (15, 25) agencée à distance.

9. Insert de vissage selon l'une quelconque des revendications 5 à 8, dans lequel la tige de vissage (12) comprend un filetage extérieur pour le vissage dans le demi-produit fibreux (80) et l'au moins une pale filetée (14, 34) est agencée sur la section d'actionnement parallèlement à distance de la tige de vissage (12).

10. Outil de pressage comprenant une première partie d'outil (71) et une deuxième partie d'outil (72), les deux parties d'outil (71, 72) formant, à l'état fermé, une cavité (74) pour la réception avec façonnement d'un demi-produit fibreux (80), **caractérisé en ce qu'**au moins une partie d'outil (71, 72) présente un dispositif à vis (73) pouvant être actionné en direction de la cavité (74) pour visser un insert de vissage (10, 20, 30) dans le demi-produit fibreux (80) à agencer dans la cavité (74).

11. Outil de pressage selon la revendication 10, **caractérisé en ce que** le dispositif à vis (73) comprend un élément de vis (73a) mobile en rotation et mobile longitudinalement en direction de la cavité, qui est configuré avec une section de liaison tournée vers la cavité (74) pour la sollicitation par complémentarité de forme d'un insert de vissage (10, 20, 30).

12. Outil de pressage selon l'une quelconque des revendications 10 à 11, **caractérisé en ce que** le dispositif à vis (73) est configuré pour pouvoir être encastré dans la partie d'outil (71, 72).

13. Outil de pressage selon l'une quelconque des revendications 10 à 12, **caractérisé en ce que** l'outil de pressage (70) est un outil de pressage humide.
